# DEMANDE DE BREVET EUROPEEN

(11) **EP 4 675 977 A1**
(43) Date de publication de la demande: **07.01.2026**
(21) Numéro de dépôt: 24315319.4
(22) Date de dépôt: 03.07.2024
(51) Int. Cl.: H04L 9/40, H04W 12/02, H04W 36/14, H04W 88/06

(54) **PROCÉDÉ ET DISPOSITIF D'INTERFAÇAGE D'UN RÉSEAU MOBILE À UN RÉSEAU DISTANT PAR L'INTERMÉDIAIRE D'UN RÉSEAU D'ACCÈS**

(71) Demandeur: Free Mobile, 75008 Paris (FR)
(72) Inventeur: Cassen, Alexandre, 75017 Paris (FR); Cahilhac, Sylvain, 91210 Draveil (FR)
(74) Mandataire: Dupuis-Latour, Dominique

(57) **Abrégé**

Une interface (400) couple un réseau mobile (110) d'un opérateur de réseau mobile à un réseau d'accès (210) d'un opérateur de réseau fixe, pour permettre à un équipement utilisateur connecté au réseau mobile d'accéder à un réseau cible privé ou public via le réseau d'accès. L'interface comprend côté réseau mobile une pile de protocoles (410) incluant : i) une couche liaison Ethernet (411, ETH), et ii) une couche de protocole du réseau mobile (413, GTP) incorporant des données d'identification de l'UE (10) produites par le réseau mobile (100). L'interface comprend côté réseau d'accès une pile de protocoles (420) incluant une couche liaison Ethernet (421) avec une adresse MAC virtuelle (VETH). L'adresse MAC virtuelle (VETH) est générée par incorporation d'un identifiant unique propre à l'UE, notamment l'identifiant MSIN de l'IMSI de l'usager de l'UE obtenu par le réseau mobile et incorporé dans la couche de protocole du réseau mobile (413, GTP) de la pile de protocoles (410) côté réseau mobile.

## Description

L'invention concerne l'interfaçage des réseaux mobiles et des réseaux fixes. Il s'agit de permettre à un équipement utilisateur (ci-après "UE") connecté à un réseau de téléphonie mobile (3G/4G/5G/...), (ci-après "réseau mobile") d'accéder à des réseaux fixes distants (ci-après "réseaux cibles"), en particulier des réseaux privés tels que des extranets d'entreprise, mais aussi éventuellement des réseaux publics tels qu'Internet.

### État de la technique antérieure

Si l'on considère par exemple un réseau mobile de type LTE, celui-ci comporte, dans son architecture de base, une pluralité de stations de base (eNB), rattachées à un coeur de réseau ou EPC (*Evolved Packet Core*) assurant l'interconnexion des différents utilisateurs entre eux et aux réseaux et services distants (Internet, bases de données dématérialisées, etc.).

La référence à une technologie de réseau LTE (4G), avec notamment sa terminologie propre telle que "EPC", n'est toutefois donnée qu'à titre d'exemple non limitatif dans la mesure où, comme on le comprendra, le procédé de l'invention peut être mis en oeuvre indépendamment de la technologie de réseau mobile utilisée (le coeur de réseau étant ainsi dénommé "5GC" (*5G Core*) en technologie 5G, etc.).

L'EPC d'un opérateur LTE est interfacé aux eNB via un réseau radio d'accès ou RAN (*Radio Access Network*). Les EPC comprennent principalement, des passerelles de desserte SGW (*Serving GateWays*), qui transportent le trafic de données (au plan utilisateur) et concentrent le trafic de plusieurs eNB, et des entités de gestion de mobilité MME (*Mobility Management Entity*), qui gèrent (au plan de contrôle) la signalisation pour la mobilité et donnent accès aux bases de données HSS/HLR (*Home Subscriber Server*/*Home Location Register*) contenant les identifiants et les droits des abonnés. Par ailleurs, une ou plusieurs passerelles PGW (*Packet GateWay*) assurent les échanges vers le réseau Internet et attribuent des adresses IP aux terminaux UE. Les PGW reçoivent les données collectées par la SGW en provenance des UE, et font fonction de portes d'entrée entre le réseau IP de l'opérateur de réseau mobile et le réseau Internet, en acheminant les données de l'UE vers Internet et *vice versa.* Plus précisément, chaque fois qu'un utilisateur du réseau mobile souhaite se connecter au réseau Internet ou à un réseau privé virtuel (VPN), son UE utilise un identifiant de point d'accès APN (*Access Point Name*) afin de sélectionner une PGW pour router le trafic de l'UE. L'abonné est identifié sur la PGW par son IMSI (*International Mobile Subscriber Identity*), et l'UE est identifié sur la PGW par son IMEISV (*International Mobile Station Equipment Identity Software Version*). La PGW contient les conditions d'accès et le routage pour offrir le service à l'abonné.

Ces technologies et protocoles sont spécifiques et complexes, et requièrent de ce fait des équipements réseaux spécialisés, coûteux, et du personnel expert en mesure de les concevoir et de les exploiter.

De fait, l'augmentation du nombre d'utilisateurs potentiels -jusqu'à plusieurs centaines de milliers - impose de multiplier le nombre d'équipements au niveau notamment des PGW pour pouvoir disposer d'une capacité d'accès suffisante permettant d'établir toutes les communications et acheminer et router le trafic de données en provenance et à destination des UE des utilisateurs.

### Résumé de l'invention

Le but de l'invention est d'apporter une simplification à cette architecture conventionnelle.

En particulier, comme on le verra, l'invention permet de faire l'économie des passerelles PGW conventionnelles du réseau mobile, en remplaçant celles-ci au niveau de l'interfaçage entre le réseau mobile et le réseau fixe par une "brique logicielle" implémentée au niveau des piles protocolaires.

Essentiellement, cette interface selon l'invention traduit le protocole du réseau mobile (généralement un protocole GTP, *GPRS Tunneling Protocol*) en un protocole Ethernet qui soit directement utilisable par le réseau cible après avoir été analysé et interprété par le réseau de l'opérateur de réseau fixe (réseau ci-après désigné "réseau d'accès") qui couple le réseau mobile aux réseaux cibles privés (de façon directe sans passer par le réseau Internet) ou publics (notamment à Internet).

On notera toutefois que, si l'invention permet, comme on le verra, de remplacer une ou plusieurs PGW par une brique logicielle simple assurant la fonction de la PGW, cette substitution n'est pour autant pas nécessaire dans la mesure où, dans une utilisation spécifique, l'invention peut être également mise en oeuvre par exemple dans le cadre d'un proxy assurant une intermédiation entre une SGW et une PGW dans une architecture de réseau préexistante.

Pour atteindre les buts précités, l'invention propose un procédé d'établissement d'une connexion à un réseau cible public par un équipement utilisateur, UE, mobile connecté à un réseau mobile d'un opérateur de réseau mobile, la liaison au réseau cible étant opérée par l'intermédiaire d'un réseau d'accès d'un opérateur de réseau fixe.

De façon caractéristique de l'invention : le procédé met en oeuvre, entre le réseau mobile et le réseau d'accès, une interface couplée au réseau mobile via un protocole de réseau mobile et couplée au réseau d'accès via un protocole de réseau fixe, l'interface comprenant des piles de protocoles respectives côté réseau mobile et côté réseau d'accès ; l'interface comprend côté réseau mobile une pile de protocoles incluant : i) une couche liaison Ethernet, et ii) une couche de protocole du réseau mobile incorporant des données d'identification de l'UE produites par le réseau mobile ; l'interface comprend côté réseau d'accès une pile de protocoles incluant une couche liaison Ethernet avec une adresse MAC virtuelle ; et l'adresse MAC virtuelle incorpore un identifiant unique propre à l'UE, dérivé desdites données d'identification de l'UE produites par le réseau mobile et incorporées dans la couche de protocole du réseau mobile de la pile de protocoles côté réseau mobile.

L'invention couvre également, en tant que telle, l'interface de connexion mise en oeuvre par ce procédé, cette interface comprenant : côté réseau mobile une pile de protocoles incluant : i) une couche liaison Ethernet, et ii) une couche de protocole du réseau mobile incorporant des données d'identification de l'UE produites par le réseau mobile ; et côté réseau d'accès une pile de protocoles incluant une couche liaison Ethernet avec une adresse MAC virtuelle. L'interface est apte à générer l'adresse MAC virtuelle par incorporation d'un identifiant unique propre à l'UE, dérivé desdites données d'identification de l'UE produites par le réseau mobile et incorporées dans la couche de protocole du réseau mobile de la pile de protocoles côté réseau mobile.

Selon diverses caractéristiques subsidiaires avantageuses :
- le procédé comprend en outre, par un équipement du réseau d'accès : la réception d'une transmission en provenance du réseau mobile via l'interface ; l'analyse desdites données d'identification de l'UE produites par le réseau mobile et incorporées dans la couche de protocole du réseau mobile de la pile de protocoles côté réseau mobile ; et l'acheminement de la transmission vers le réseau cible ;
- l'équipement est alors avantageusement une passerelle d'entrée/sortie de type *Border Network Gateway*, BNG, du réseau d'accès ;
- l'UE désignant le réseau cible par un nom de domaine Internet, le procédé comprend en outre : l'obtention d'une adresse IP par un service *Domain Name System*, DNS ; et l'acheminement de la transmission vers le réseau cible est opéré en fonction de l'adresse IP résolue par DNS ou d'un nom de domaine Internet préalablement résolu par DNS ;
- l'interface assure dans le réseau mobile une fonction de passerelle de type *Packet Data Network Gateway*, P-GW ;
- le procédé opère une pluralité de connexions simultanées de l'UE au réseau d'accès, avec pour chaque connexion un identifiant de point d'accès *Access Point Name*, APN, propre et une adresse MAC virtuelle associée distincte ;
- l'adresse MAC virtuelle est une combinaison de l'adresse MAC cible avec l'identifiant *Mobile Subscriber Identification Number*, MSIN, de *l'International Mobile Subscriber Identity*, IMSI, de l'usager de l'UE ;
- le protocole de réseau mobile est un protocole *GPRS Tunneling Protocol*, GTP ;
- le protocole de réseau d'accès est un protocole Ethernet, ou bien est un *protocole PPP over Ethernet*, PPPoE encapsulant un protocole *Point-to-Point Protocol*, PPP, dans un protocole Ethernet, et la couche liaison de la pile de protocoles côté réseau d'accès comprend un entête PPP en plus de l'adresse MAC virtuelle.

### Brève description des dessins

La Figure 1 présente de façon globale et schématique l'environnement des différents réseaux susceptibles d'être interconnectés par mise en oeuvre des enseignements de l'invention.
La Figure 2 illustre les piles de protocoles de l'interface selon l'invention, côté réseau mobile et côté réseau d'accès, dans un premier mode de mise en oeuvre de l'invention.
La Figure 3 est homologue de la Figure 2, dans un second mode de mise en oeuvre de l'invention.
La Figure 4 explicite, avec un exemple particulier, la manière de générer une adresse MAC virtuelle selon les enseignements de l'invention.

### Description des modes de réalisation

On va maintenant décrire un exemple de mise en oeuvre de l'invention, en référence aux dessins annexés où les mêmes références désignent d'une figure à l'autre des éléments identiques ou fonctionnellement semblables.

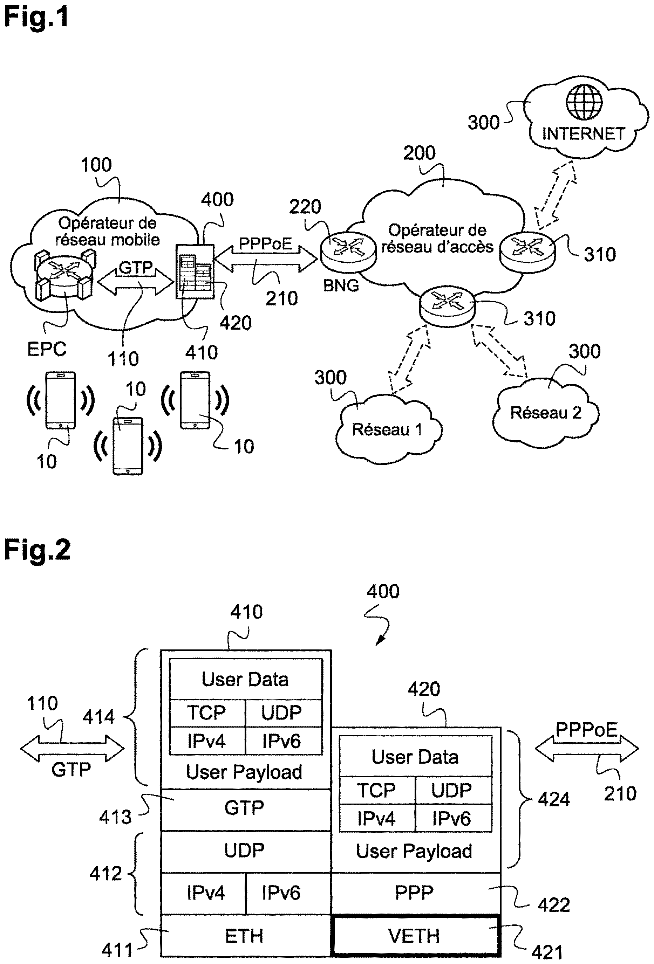

Sur la Figure 1, la référence 100 désigne un réseau cellulaire de téléphonie mobile, géré par un opérateur de réseau mobile conformément aux spécifications conventionnelles GSM, UMTS, LTE, LTE-A, NR, etc. (3G, 4G, 5G, ...), qui ne sont pas modifiées par l'implémentation de l'invention dans le réseau mobile 100.

Les utilisateurs de ce réseau mobile, chacun avec un équipement utilisateur, UE, propre, se connectent par voie hertzienne à des stations de base ou eNB reliées à un coeur de réseau EPC assurant l'interconnexion des différents UE entre eux et à des réseaux ou services distants hors du réseau mobile 100. L'invention se place précisément dans ce dernier cas, où un utilisateur d'un UE 10 souhaite accéder à un réseau distant 300, notamment un réseau privé tel qu'un extranet d'entreprise ("Réseau 1", "Réseau 2", sur la Figure 1), mais aussi éventuellement à un réseau public tel qu'Internet.

L'accès à ces réseaux distants, ci-après "réseaux cibles", est opéré par un réseau intermédiaire ou "réseau d'accès" 200, géré par un opérateur de réseau d'accès qui peut être le même, ou un autre, que l'opérateur du réseau mobile 100.

Les protocoles les plus couramment utilisés à cet effet sont i) au sein du réseau mobile 100, GTP (*GPRS Tunneling Protocol*), qui est un protocole basé sur IP utilisé pour le transfert des paquets dans les réseaux mobiles et ii) entre le réseau mobile et le réseau d'accès, un protocole Ethernet ou, le plus souvent, PPPoE (*PPP over Ethernet*), qui est une encapsulation d'un PPP (*Point-to-Point Protocol*) sur Ethernet, par ajout d'un en-tête PPP spécifique à la couche liaison Ethernet.

Le protocole GTP intervient sur la liaison 110 entre le coeur de réseau EPC et un routeur du réseau mobile, qui est une passerelle PGW dans une configuration conventionnelle.

PPPoE (ou PPP), quant à lui, établit un tunnel entre un routeur du réseau mobile (la passerelle PGW dans une configuration conventionnelle) et un routeur 220 du réseau d'accès, typiquement un équipement d'accès de type passerelle d'entrée/sortie BNG (*Border Network Gateway*), qui agrège le trafic en provenance des différents UE connectés au réseau mobile et route ce trafic vers le noeud suivant du réseau d'accès.

D'autres BNG, référencés 210, assurent l'interconnexion du réseau d'accès 200 avec les réseaux cibles distants 300, privés ou publics.

Le procédé de l'invention est mis en oeuvre par une interface repérée 400 sur la Figure 1, avec une pile de protocoles 410 côté réseau mobile et une pile de protocoles 420 côté réseau d'accès.

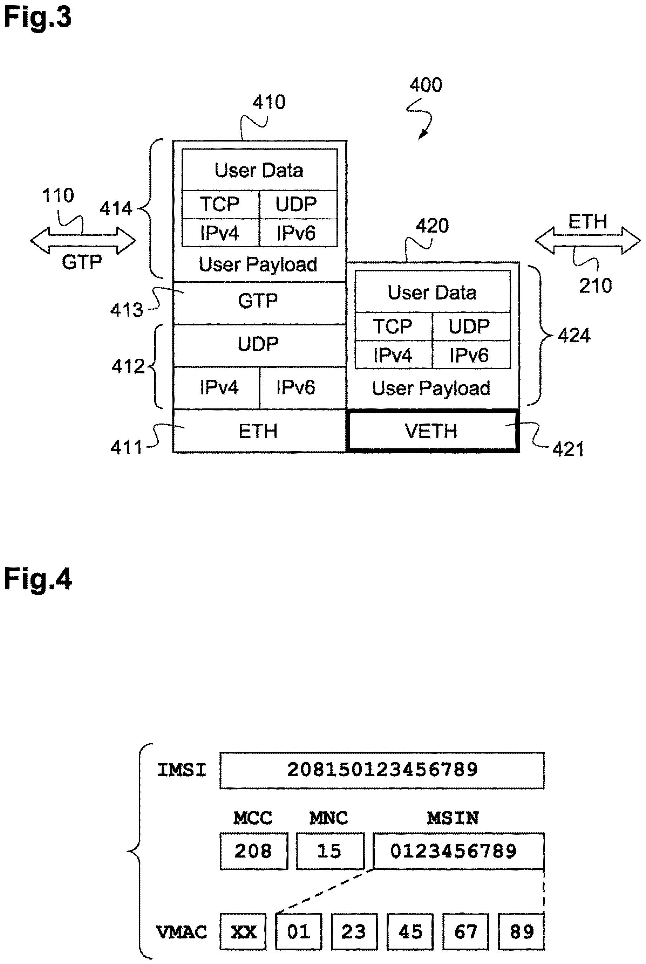

Ces piles de protocoles 410 et 420 sont détaillées Figures 2 et 3, respectivement dans le cas d'un interfaçage GTP/PPPoE et GTP/Ethernet.

La Figure 2 illustre en détail la pile de protocoles selon l'invention dans le mode de mise en oeuvre où l'interfaçage est opéré entre, côté réseau mobile, un flux en protocole GTP et, côté réseau d'accès, un flux en protocole PPPoE.

La pile de protocoles 410 côté réseau mobile comprend successivement, des couches les plus hautes vers les couches les plus basses :
- en 414, les données utilisateur traversant le réseau mobile en provenance ou à destination de l'UE, qui ne sont pas modifiées par l'opération d'interfaçage ;
- en 413, une couche GTP correspondant à la session de données par l'UE tel que ce dernier a été identifié par le réseau mobile, cette couche contenant donc les identifiants de l'UE au sein du réseau mobile, dans un en-tête de la couche GTP ;
- en 412, une couche UDP (*User Datagram Protocol*)/IPv4 (*Internet Protocol version 4*) ou IPv6 (*Internet Protocol version 6*), servant à transporter les informations GTP de la couche 413 ; et
- en 411, une couche liaison Ethernet, correspondant à des données locales (sans lien avec l'UE ni avec le réseau cible) relatives aux équipements du réseau mobile (routeur, PGW, ...) de la session en cours avec l'UE.

La pile de protocoles 420 côté réseau d'accès comprend successivement, des couches les plus hautes vers les couches les plus basses :
- en 424, les données utilisateur, le contenu de cette couche 424 étant identique à celui de la couche 414 côté réseau d'accès ;
- en 422, une couche PPP (*Point-to-Point Protocol*), et
- en 421, une couche Ethernet virtuelle VETH, constituée de la manière que l'on décrira ci-après en référence à la Figure 4.

Les adresses Ethernet virtuelles de la couche 421 sont des adresses MAC virtuelles uniques identifiant les UE sur le réseau d'accès. On notera qu'un même UE peut initier et utiliser plusieurs connexions simultanées au réseau d'accès, par exemple une connexion pour l'échange de données, une connexion pour la voix sur IP (VoLTE, *Voice over LTE*), une pour l'échange de SMS ou de MMS, etc. avec pour chaque connexion un identifiant de point d'accès APN propre et un adresse MAC virtuelle associée distincte.

L'analyse de la couche VETH 421 par le réseau d'accès, combinée à l'analyse de la couche PPP 422 pour déterminer la manière de transmettre la trame, permet au réseau d'accès d'assurer l'interconnexion entre, d'une part, l'UE dans le réseau mobile et, d'autre part, le réseau cible avec lequel l'UE souhaite échanger les données utilisateur contenues dans le bloc 410/420 de l'interface 400.

Dans la variante de la Figure 3, le réseau mobile est directement interfacé avec le réseau d'accès par un protocole Ethernet, la couche PPP d'encapsulation 422 n'est donc plus nécessaire.

Toutes les autres couches des piles de protocoles de l'interface, tant côté réseau mobile que côté réseau d'accès, sont fonctionnellement identiques à celles de la Figure 3, et ne seront donc pas décrites à nouveau.

Dans l'un ou l'autre cas (interfaçage PPPoE ou bien interfaçage Ethernet côté réseau d'accès), l'adresse Ethernet virtuelle incorpore, comme indiqué plus haut, un identifiant unique propre à l'UE, qui est dérivé des données d'identification de l'UE produites par le réseau mobile et incorporées dans la couche de protocole GTP 413 de la pile de protocoles côté réseau mobile ; et ce pour chaque connexion de chaque UE dans le cas de plusieurs connexions simultanées.

Dans une mise en oeuvre particulièrement avantageuse, l'adresse MAC virtuelle est constituée à partir de l'IMSI (*International Mobile Subscriber Identity*) de l'utilisateur du terminal de l'UE, selon le schéma d'allocation illustré Figure 4.

Un IMSI est constitué d'un indicatif de pays d'origine MCC (*Mobile Country Code*), d'un identifiant de l'opérateur de réseau MNC (*Mobile Network Code*) et d'un numéro d'abonné MSIN (*Mobile Subscriber Identification Number* )attribué par l'opérateur à l'intérieur de son réseau.

Seul le MSIN de l'IMSI est pris en compte pour construire l'adresse MAC virtuelle. Le MSIN est de préférence utilisé avec les chiffres en format BCD (décimal codé binaire) pour allouer les chiffres de l'adresse MAC.

En format EUI-48, une adresse MAC comprend 48 bits (6 octets). Les chiffres du MSIN forment les 5 octets de poids le plus bas de l'adresse VMAC, l'octet de tête étant réservé. Il est possible ainsi de définir 64 adresses virtuelles VMAC pour chaque IMSI 64 (le premier octet étant réservé pour les deux bits U/L et I/G).

On va maintenant décrire la manière dont opère l'interface selon l'invention, avec une adresse MAC virtuelle ainsi constituée.

Dans le cas d'un interfaçage GTP/PPPoE (cas de la Figure 2), lorsque l'UE initie une connexion, l'équipement d'accès BNG 220 du réseau d'accès voit arriver une demande de connexion PPPoE contenant des informations propres à l'UE, telles que l'IMSI, l'IMEI, etc. de la session. Si nécessaire, le BNG 220 peut faire office de concentrateur LAC (*L2TP Access Concentrator*) et renvoyer le trafic en L2TP *(Layer 2 Tunneling Protocol*) vers un LNS (*L2TP Network Server*) sur un autre réseau. Sinon, il peut traiter le flux PPPoE directement, renvoyer au mobile des paramètres tels qu'une adresse IP et/ou une adresse d'un service DNS (*Domain Name System*), et placer la session PPP dans le réseau cible requis. Par la suite, le BNG 220 n'aura plus qu'à router du trafic IP sur PPPoE entre le réseau mobile et le réseau cible.

Dans le cas d'un interfaçage GTP/Ethernet (cas de la Figure 3), lorsque le terminal initie une connexion, l'interface 400 la traduit en requête DHCP (*Dynamic Host Configuration Protocol*)*.* Le BNG 220 voit alors arriver cette requête dont la source est l'adresse MAC virtuelle allouée par l'interface 400 et contenant, conformément aux prescriptions du protocole DHCP, des informations telles que l'IMSI, l'IMEI, un APN auquel souhaite accéder l'UE, etc. Le BNG 220 peut alors placer la session dans le réseau cible requis, y appliquer des profils de routage et de qualité de service QoS, et communiquer en réponse des éléments tels que l'adresse IP à utiliser, les serveurs DNS, etc. L'interface 400 traduit cette réponse à destination du coeur de réseau du réseau mobile, puis n'aura ensuite qu'à router du trafic IPoE (*Internet Protocol over Ethernet*).

## Revendications

1. Un procédé d'établissement d'une connexion à un réseau cible privé (300) ou à un réseau cible public (310) par un équipement utilisateur, UE, (10) mobile connecté à un réseau mobile (100) d'un opérateur de réseau mobile, la liaison au réseau cible (300) étant opérée par l'intermédiaire d'un réseau d'accès (200) d'un opérateur de réseau fixe,
**caractérisé en ce que** le procédé met en oeuvre, entre le réseau mobile (100) et le réseau d'accès (200), une interface (400) couplée au réseau mobile (100) via un protocole de réseau mobile et couplée au réseau d'accès (200) via un protocole de réseau fixe, l'interface (400) comprenant des piles de protocoles respectives (410, 420) côté réseau mobile et côté réseau d'accès,
**en ce que** l'interface (400) comprend côté réseau mobile une pile de protocoles (410) incluant : i) une couche liaison Ethernet (411, ETH), et ii) une couche de protocole du réseau mobile (413, GTP) incorporant des données d'identification de l'UE (10) produites par le réseau mobile (100),
**en ce que** l'interface (400) comprend côté réseau d'accès une pile de protocoles (420) incluant une couche liaison Ethernet (421) avec une adresse MAC virtuelle (VETH),
**et en ce que** l'adresse MAC virtuelle (VETH) incorpore un identifiant unique propre à l'UE (10), dérivé desdites données d'identification de l'UE (10) produites par le réseau mobile (100) et incorporées dans la couche de protocole du réseau mobile (413, GTP) de la pile de protocoles (410) côté réseau mobile.

2. Le procédé de la revendication 1, comprenant en outre,
par un équipement (210) du réseau d'accès (200) :
- la réception d'une transmission en provenance du réseau mobile (100) via l'interface (400) ;
- l'analyse desdites données d'identification de l'UE (10) produites par le réseau mobile (100) et incorporées dans la couche de protocole du réseau mobile (413, GTP) de la pile de protocoles (410) côté réseau mobile ; et
- l'acheminement de la transmission vers le réseau cible (300).

3. Le procédé de la revendication 2, dans lequel :
- l'UE désigne le réseau cible par un nom de domaine Internet ;
- le procédé comprend en outre l'obtention d'une adresse IP par un service *Domain Name System*, DNS ; et
- l'acheminement de la transmission vers le réseau cible (300) est opéré en fonction de l'adresse IP résolue par DNS ou d'un nom de domaine Internet préalablement résolu par DNS.

4. Le procédé de la revendication 2, dans lequel l'équipement (210) est une passerelle d'entrée/sortie de type *Border Network Gateway*, BNG, du réseau d'accès (200).

5. Le procédé de la revendication 1, dans lequel l'interface (400) assure dans le réseau mobile une fonction de passerelle de type *Packet Data Network Gateway*, P-GW.

6. Le procédé de la revendication 1, comprenant une pluralité de connexions simultanées de l'UE (10) au réseau d'accès (200), avec pour chaque connexion un identifiant de point d'accès *Access Point Name*, APN, propre et une adresse MAC virtuelle (VMAC) associée distincte.

7. Une interface (400) de connexion d'un réseau mobile (100) d'un opérateur de réseau mobile à un réseau d'accès (200) d'un opérateur de réseau fixe, pour permettre à un équipement utilisateur, UE, (10) mobile connecté au réseau mobile (100) d'accéder à un réseau cible privé (300) ou à un réseau cible public (310) via le réseau d'accès (200),
**caractérisée en ce que** l'interface (400) comprend côté réseau mobile une pile de protocoles (410) incluant : i) une couche liaison Ethernet (411, ETH), et ii) une couche de protocole du réseau mobile (413, GTP) incorporant des données d'identification de l'UE (10) produites par le réseau mobile (100),
**en ce que** l'interface (400) comprend côté réseau d'accès une pile de protocoles (420) incluant une couche liaison Ethernet (421) avec une adresse MAC virtuelle (VETH),
**et en ce que** l'interface est apte à générer l'adresse MAC virtuelle (VETH) par incorporation d'un identifiant unique propre à l'UE (10), dérivé desdites données d'identification de l'UE (10) produites par le réseau mobile (100) et incorporées dans la couche de protocole du réseau mobile (413, GTP) de la pile de protocoles (410) côté réseau mobile.

8. Le procédé de la revendication 1 ou l'interface de la revendication 7, dans lesquels l'adresse MAC virtuelle (VETH) est une combinaison de l'adresse MAC cible avec l'identifiant *Mobile Subscriber Identification Number*, MSIN, de *l'International Mobile Subscriber Identity*, IMSI, de l'usager de l'UE (10).

9. Le procédé de la revendication 1 ou l'interface de la revendication 7, dans lesquels le protocole de réseau mobile est un protocole *GPRS Tunneling Protocol*, GTP.

10. Le procédé de la revendication 1 ou l'interface de la revendication 7, dans lesquels le protocole de réseau d'accès est un protocole Ethernet.

11. Le procédé de la revendication 1 ou l'interface de la revendication 7, dans lesquels le protocole de réseau d'accès est un protocole *PPP over Ethernet*, PPPoE encapsulant un protocole *Point-to-Point Protocol*, PPP, dans un protocole Ethernet, et dans lesquels la couche liaison (421, 422) de la pile de protocoles (420) côté réseau d'accès comprend un entête PPP (422) en plus de l'adresse MAC virtuelle (421, VETH).

## Revendications modifiées

### Revendications modifiées conformément à la règle 137(2) CBE.

1. Un procédé d'établissement d'une connexion à un réseau cible privé (300) ou à un réseau cible public (310) par un équipement utilisateur, UE, (10) mobile connecté à un réseau mobile (100) de téléphonie d'un opérateur de réseau de téléphonie mobile, la liaison au réseau cible (300) étant opérée par l'intermédiaire d'un réseau d'accès (200) fixe d'un opérateur de réseau fixe, **caractérisé en ce que** le procédé met en œuvre, entre le réseau mobile (100) et le réseau d'accès (200), une interface (400) couplée au réseau mobile (100) via un protocole de réseau mobile (GTP) et couplée au réseau d'accès (200) via un protocole de réseau d'accès (PPPoE), l'interface (400) comprenant des piles de protocoles respectives (410, 420) côté réseau mobile et côté réseau d'accès,
**en ce que** l'interface (400) comprend côté réseau mobile une pile de protocoles (410) incluant : i) une couche liaison Ethernet (411, ETH), et ii) une couche de protocole du réseau mobile (413, GTP) incorporant des données d'identification de l'UE (10) produites par le réseau mobile (100),
**en ce que** l'interface (400) comprend côté réseau d'accès une pile de protocoles (420) incluant une couche liaison Ethernet (421) avec une adresse MAC virtuelle (VETH),
**et en ce que** le procédé comprend une étape de création de l'adresse MAC virtuelle (VETH) par incorporation d'un identifiant unique propre à l'UE (10), dérivé de *l'International Mobile Subscriber Identity,* IMSI, identifiant l'usager de l'UE (10), inclus dans lesdites données d'identification de l'UE (10) produites par le réseau mobile (100) et incorporées dans la couche de protocole du réseau mobile (413, GTP) de la pile de protocoles (410) côté réseau mobile, pour traduire le protocole du réseau mobile en un protocole Ethernet directement utilisable par le réseau cible (300) après avoir été analysé et interprété par le réseau d'accès (200) de l'opérateur de réseau fixe.

2. Le procédé de la revendication 1, comprenant en outre,
par un équipement (210) du réseau d'accès (200) :
- la réception d'une transmission en provenance du réseau mobile (100) via l'interface (400) ;
- l'analyse desdites données d'identification de l'UE (10) produites par le réseau mobile (100) et incorporées dans la couche de protocole du réseau mobile (413, GTP) de la pile de protocoles (410) côté réseau mobile ; et
- l'acheminement de la transmission vers le réseau cible (300).

3. Le procédé de la revendication 2, dans lequel :
- l'UE désigne le réseau cible par un nom de domaine Internet ;
- le procédé comprend en outre l'obtention d'une adresse IP par un service *Domain Name System,* DNS ; et
- l'acheminement de la transmission vers le réseau cible (300) est opéré en fonction de l'adresse IP résolue par DNS ou d'un nom de domaine Internet préalablement résolu par DNS.

4. Le procédé de la revendication 2, dans lequel l'équipement (210) est une passerelle d'entrée/sortie de type *Border Network Gateway,* BNG, du réseau d'accès (200).

5. Le procédé de la revendication 1, dans lequel l'interface (400) assure dans le réseau mobile une fonction de passerelle de type *Packet Data Network Gateway,* P-GW.

6. Le procédé de la revendication 1, comprenant une pluralité de connexions simultanées de l'UE (10) au réseau d'accès (200), avec pour chaque connexion un identifiant de point d'accès *Access Point Name,* APN, propre et une adresse MAC virtuelle (VMAC) associée distincte.

7. Le procédé de la revendication 1, dans lequel le protocole de réseau mobile est un protocole *GPRS Tunneling Protocol,* GTP.

8. Le procédé de la revendication 1, dans lequel le protocole de réseau d'accès est un protocole Ethernet.

9. Le procédé de la revendication 1, dans lesquels le protocole de réseau d'accès est un protocole *PPP over Ethernet,* PPPoE encapsulant un protocole *Point-to-Point Protocol,* PPP, dans un protocole Ethernet, et dans lesquels la couche liaison (421, 422) de la pile de protocoles (420) côté réseau d'accès comprend un entête PPP (422) en plus de l'adresse MAC virtuelle (421, VETH).

10. Une interface (400) de connexion d'un réseau mobile (100) de téléphonie d'un opérateur de réseau de téléphonie mobile à un réseau d'accès (200) fixe d'un opérateur de réseau fixe, pour permettre à un équipement utilisateur, UE, (10) mobile connecté au réseau mobile (100) d'accéder à un réseau cible privé (300) ou à un réseau cible public (310) via le réseau d'accès (200), **caractérisée en ce que** l'interface (400) comprend côté réseau mobile une pile de protocoles (410) incluant : i) une couche liaison Ethernet (411, ETH), et ii) une couche de protocole du réseau mobile (413, GTP) incorporant des données d'identification de l'UE (10) produites par le réseau mobile (100),
**en ce que** l'interface (400) comprend côté réseau d'accès une pile de protocoles (420) incluant une couche liaison Ethernet (421) avec une adresse MAC virtuelle (VETH),
**et en ce que** l'interface est apte à générer l'adresse MAC virtuelle (VETH) par incorporation d'un identifiant unique propre à l'UE (10), dérivé de l*'International Mobile Subscriber Identity,* IMSI, identifiant l'usager de l'UE (10), inclus dans lesdites données d'identification de l'UE (10) produites par le réseau mobile (100) et incorporées dans la couche de protocole du réseau mobile (413, GTP) de la pile de protocoles (410) côté réseau mobile, pour traduire le protocole du réseau mobile en un protocole Ethernet directement utilisable par le réseau cible (300) après avoir été analysé et interprété par le réseau d'accès (200) de l'opérateur de réseau fixe [*support : p.2 I.27-33*].

11. L'interface de la revendication 10, dans laquelle le protocole de réseau mobile est un protocole *GPRS Tunneling Protocol,* GTP.

12. L'interface de la revendication 10, dans laquelle le protocole de réseau d'accès est un protocole Ethernet.

13. L'interface de la revendication 10, dans laquelle le protocole de réseau d'accès est un protocole *PPP over Ethernet,* PPPoE encapsulant un protocole *Point-to-Point Protocol,* PPP, dans un protocole Ethernet, et dans lesquels la couche liaison (421, 422) de la pile de protocoles (420) côté réseau d'accès comprend un entête PPP (422) en plus de l'adresse MAC virtuelle (421, VETH).
